# EUROPEAN PATENT APPLICATION

(11) **EP 2 852 087 A1**
(43) Date of publication of application: **25.03.2015**
(21) Application number: 13790877.8
(22) Date of filing: 13.05.2013
(51) Int. Cl.: H04L 7/04, H04L 12/70

(54) **PACKET NETWORK SYNCHRONIZATION METHOD, APPARATUS AND SYSTEM**

(30) Priority: 14.05.2012 CN 201210148499; 12.07.2012 CN 201210241344
(71) Applicant: ZTE Corporation, Shenzhen, Guangdong 518057 (CN)
(72) Inventor: ZHANG, Junhui, Shenzhen Guangdong 518057 (CN)
(74) Representative: Garratt, Peter Douglas
(86) International application number: PCT/CN2013/075558
(87) International publication number: WO 2013/170736

(57) **Abstract**

The embodiments of the present invention disclose a method, apparatus and system for synchronizing a packet network. The method includes: a synchronous device mapping a synchronization state of a frequency layer to a synchronization state message of a time layer, and announcing the synchronization state message to a downstream node of the time layer, so that the downstream node of the time layer decides whether to perform protection switching and/or trace an upstream reference source according to the synchronization state message. The present invention is adopted to realize processing association between a frequency layer and a time layer, generating a message and quickly announcing to a downstream network, so that a downstream synchronous device can perform corresponding processing, avoiding the problem that the downstream network cannot normally switch when a reference source and an upstream synchronization link fail, and also an end device is capable of entering a hold mode in time, thus improving the synchronization performance of a synchronous network.

## Description

### Technical Field

The present invention relates to the field of packet communication network synchronization technology, and in particular, to a method, apparatus and system for synchronizing a packet network.

### Background of the Related Art

With the high-speed development of the Ethernet and 3G network, the implementation of clock and time synchronization in a packet network attract more and more attention and are widely applied. Domestic and foreign operators continuously use a synchronous Ethernet to implement clock synchronization and use the 1588 protocol to implement time synchronization, which gradually substitutes the method of using the GPS to implement time synchronization.

The existing packet synchronous network respectively uses the ITU-T G.826x series of standard specifications to implement synchronization of a frequency layer and the IEEE-1588v2 or ITU-T G.827x standard specifications to implement synchronization of a time layer. In such architecture, the frequency layer and the time layer are independent of each other. However, in practice, the time synchronization is based on the frequency synchronization, and non-synchronization of the frequency layer will seriously influence the accuracy of the time synchronization.

### Summary of the Invention

The embodiments of the present invention provide a method, apparatus and system for synchronizing a packet network, so that a time layer can know a state of a frequency layer and takes corresponding linkage actions.

A method for synchronizing a packet network according to an embodiment of the present invention comprises:
a synchronous device mapping a synchronization state of a frequency layer into a synchronization state message of a time layer, and announcing the synchronization state message to a downstream node of the time layer, so that the downstream node of the time layer decides whether to perform protection switching and/or trace an upstream reference source according to the synchronization state message.

Preferably, the synchronous device maps the synchronization state of the frequency layer into a Precision Time Protocol (PTP) message of the time layer and announces the PTP message to the downstream node of the time layer.

Preferably, the synchronous device announces the synchronization state of the frequency layer to the downstream node of the time layer when detecting that an operating mode of a phase lock loop of the frequency layer changes.

Preferably, the synchronous device maps a Synchronization Status Message Quality Level (SSM QL) state of the frequency layer into the PTP message of the time layer and announces the PTP message to the downstream node of the time layer when detecting that the SSM QL changes.

Another method for synchronizing a packet network according to an embodiment of the present invention comprises:
a synchronous device mapping detected synchronization states of a frequency layer and a time layer into a Precision Time Protocol (PTP) message of the time layer and announcing the PTP message to a downstream node, so that the downstream node decides whether to perform protection switching and/or trace an upstream reference source according to the synchronization state.

Preferably, the synchronization state of the frequency layer at least comprises an operating mode of a phase lock loop; and
the synchronization state of the time layer at least comprises an on/off state of a time link, and whether to manually configure system time of the device.

Preferably, the synchronous device maps detected synchronization states of a frequency layer and a time layer to the following synchronization state information in the PTP message according to a certain information generation rule:
traceable information of a frequency source, which maps whether to follow a frequency reference source;
traceable information of a time source, which maps whether to follow a time reference source;
clock source information, which maps the type of a clock source; and/or
clock class information, which maps a quality level of the clock source.

Preferably, the synchronous device maps detected synchronization states of the frequency layer and time layer to the following synchronization state information in the PTP message according to a certain information generation rule:
clock accuracy information which maps a clock accuracy; and/or
hop count information which maps hop count information from the synchronous device to a GM device.

Preferably, an information generation rule for the traceable information of the frequency source further comprises:
if the phase lock loop of the present synchronous device is in a lock mode, mapping the traceable information of the frequency source to following a frequency reference source; and if the phase lock loop of the present synchronous device is in a self-vibration mode, a capture mode or a hold mode, mapping the traceable information of the frequency source to not following the frequency reference source.

Preferably, an information generation rule for the traceable information of the time source further comprises:
when an upstream time link is on, if the phase lock loop of the present synchronous device is in a lock mode, mapping the traceable information of the time source to following a time reference source; and if the phase lock loop is in self-vibration mode, a capture mode or a hold mode, mapping the traceable information of the time source to not following the time reference source; and
when the upstream time link is off, if system time of the device is not manually configured, mapping the traceable information of the time source to not following the time reference source; and if the system time of the device is manually configured, mapping the traceable information of the time source to following the time reference source.

Preferably, the synchronization state of the frequency layer at least comprises a SSM QL state;
the synchronous device maps the synchronization state of the frequency layer to the following synchronization state information in the PTP message: traceable information of the frequency source, which maps whether to follow the frequency reference source; traceable information of the time source, which maps whether to follow the time reference source;
the information generation rule specifically comprises:
if the SSM QL of the present synchronous device is equal to a QL of the clock source, mapping the traceable information of the frequency source to following the frequency reference source; and if the SSM QL of the present synchronous device is equal to the QL of the present synchronous device, mapping the traceable information of the frequency source to not following the frequency reference source;
when an upstream time link is on, if the SSM QL of the present synchronous device is equal to the QL of the clock source, mapping the traceable information of the time source to following the time reference source; and if the SSM QL of the present synchronous device is equal to the QL of the present synchronous device, mapping the traceable information of the time source to not following the time reference source; and
when the upstream time link is off, if system time of the device is not manually configured, mapping the traceable information of the time source to not following the time reference source; and if the system time of the device is manually configured, mapping the traceable information of the time source to following the time reference source.

Preferably, the information generation rule for the clock class information further comprises:
mapping the clock class information to a clock quality level corresponding to an operating mode of the phase lock loop of the frequency layer and a time link state.

Preferably, when the synchronization state of the frequency layer changes, the synchronization state information is mapped and generated and announced to the downstream node of the time layer after waiting for one delay time.

In addition, the embodiment of the present invention further provides another method for synchronizing a packet network, comprising:
a downstream node knowing synchronization states of a frequency layer and a time layer of an upstream reference source and/or an upstream node and deciding whether to perform protection switching and/or trace the upstream reference source according to upstream synchronous state information carried in a received Precision Time Protocol (PTP) message of the time layer.

Preferably, the synchronization state of the frequency layer at least comprises an operating mode of a phase lock loop; and
the synchronization state of the time layer at least comprises an on/off state of a time link, and whether to manually configure system time of the device.

Preferably, when the downstream node is an intermediate node, if the phase lock loop of the frequency layer is known to be unlocked or a quality of a clock link is known to be degraded according to the synchronous state information,
if there is a protection path, it is switched to the protection path and new synchronous state information is generated according to the synchronous state information of the upstream node and the operating mode of the phase lock loop of the frequency layer of the present node and is announced to the downstream node through the PTP message;
if there is no protection path, new synchronous state information is generated according to the synchronous state information of the upstream node and the operating mode of the phase lock loop of the frequency layer of the present node and is announced to the downstream node through the PTP message.

Preferably, the synchronization state of the frequency layer at least comprises a SSM QL state;
when the downstream node is an intermediate node, if a quality of the SSM QL is known to be degraded according to the synchronous state information,
if there is a protection path, it is switched to the protection path and new synchronous state information is generated according to the synchronous state information of the upstream node and the SSM QL state of the frequency layer of the present node and is announced to the downstream node through the PTP message;
if there is no protection path, new synchronous state information is generated according to the synchronous state information of the upstream node and the SSM QL state of the frequency layer of the present node and is announced to the downstream node through the PTP message.

Preferably, when protection switching is performed, the following BMC algorithm is used: firstly comparing clock parameters and then comparing GM ids;
wherein the clock parameters comprise priorities, clock classes and/or accuracies.

Preferably, if the downstream node knows that the phase lock loop is unlocked or the SSM QL is equal to the QL of the present device or the quality of the clock link is degraded according to the synchronization state information, whether to trace the upstream reference source is decided according to the following tracing rule:
if the upstream reference source is traceable and a reference source parameter strategy is satisfied, tracing the upstream reference source; otherwise not tracing the upstream reference source and entering a hold mode;
wherein satisfying the reference source parameter strategy refers to that the requirements of any one or more combinations of the following parameters are satisfied: a quality level, a clock accuracy, and the type of the time source.

Preferably, the tracing rule specifically comprises:
for frequency synchronization, if the upstream frequency source is traceable and the reference source parameter strategy is satisfied, tracing the upstream frequency reference source; otherwise, not tracing the upstream frequency reference source, and the frequency entering a hold mode; and
for time synchronization, if the upstream frequency source and time source are traceable and the reference source parameter strategy is satisfied, tracing the upstream time reference source; otherwise, not tracing the upstream time reference source and the time entering a hold mode.

In addition, the embodiment of the present invention further provides an apparatus for synchronizing a packet network applied in a synchronous device, the apparatus comprising a frequency layer state detection module and a frequency layer state announce module, wherein
the frequency layer state detection module is configured to detect a synchronization state of the frequency layer of the synchronous device; and
the frequency layer state announce module is configured to map a synchronization state of the frequency layer into a synchronization state message of a time layer, and announce the synchronization state message to the time layer, so that a downstream node of the time layer decides whether to perform protection switching and/or trace an upstream reference source according to the synchronization state of the frequency layer.

Preferably, the frequency layer state announce module is configured to map the synchronization state of the frequency layer into a Precision Time Protocol (PTP) message of the time layer and announce the PTP message to the downstream node of the time layer.

Preferably, the frequency layer state detection module is configured to detect an operating mode of a phase lock loop of the frequency layer;
the frequency layer state announce module is configured to announce the synchronization state of the frequency layer to the downstream node of the time layer when the frequency layer state detection module detects that the operating mode of the phase lock loop of the frequency layer changes.

Preferably, the frequency layer state detection module is configured to detect a Synchronization Status Message Quality Level (SSM QL) state of the frequency layer; and
the frequency layer state announce module is configured to announce the synchronization state of the frequency layer to the downstream node of the time layer when the frequency layer state detection module detects that the SSM QL of the frequency layer changes.

In addition, the embodiment of the present invention further provides an apparatus for synchronizing a packet network applied in a synchronous device, the apparatus comprising a synchronization state detection module and a synchronization state message generation module, wherein
the synchronization state detection module is configured to detect synchronization states of a frequency layer and a time layer of a synchronous device; and
the synchronization state message generation module is configured to map the synchronization states of the frequency layer and the time layer into a Precision Time Protocol (PTP) message of the time layer and announce the PTP message to a downstream node, so that the downstream node decides whether to perform protection switching and/or trace an upstream reference source according to the synchronization state.

Preferably, the synchronization state of the frequency layer detected by the synchronization state detection module at least comprises an operating mode of a phase lock loop and/or a Synchronization Status Message Quality Level (SSM QL) state of the frequency layer; and
the synchronization state of the time layer detected by the synchronization state detection module at least comprises an on/off state of a time link, and whether to manually configure system time of the device.

Preferably, the synchronization state message generation module is configured to map the synchronization states of the frequency layer and the time layer to the following synchronization state information in the PTP message according to a certain information generation rule:
traceable information of a frequency source, which maps whether to follow a frequency reference source;
traceable information of a time source, which maps whether to follow a time reference source;
clock source information, which maps the type of a clock source;
clock class information, which maps a quality level of the clock source;
clock accuracy information, which maps a clock accuracy; and
hop count information, which maps hop count information from the synchronous device to a GM device.

Preferably, the synchronization state message generation module is configured to generate the traceable information of the frequency source according to the following information generation rule:
if the phase lock loop of the present synchronous device is in a lock mode or the SSM QL is equal to a QL of the clock source, mapping the traceable information of the frequency source to following the frequency reference source; and if the phase lock loop of the present synchronous device is in a self-vibration mode, a capture mode or a hold mode or the SSM QL is equal to the QL of the present synchronous device, mapping the traceable information of the frequency source to not following the frequency reference source.

Preferably, the synchronization state message generation module is configured to generate the traceable information of the time source according to the following information generation rule:
when an upstream time link is on, if the phase lock loop of the present synchronous device is in a lock mode or the SSM QL is equal to a QL of the clock source, mapping the traceable information of the time source to following the time reference source; and if the phase lock loop is in a self-vibration mode, a capture mode or a hold mode or the SSM QL is equal to the QL of the present synchronous device, mapping the traceable information of the time source to not following the time reference source; and
when the upstream time link is off, if system time of the device is not manually configured, mapping the traceable information of the time source to not following the time reference source; and if the system time of the device is manually configured, mapping the traceable information of the time source to following the time reference source.

Preferably, the synchronization state message generation module is configured to map and generate the synchronization state information and announce the synchronization state information to the downstream node of the time layer after waiting for one delay time when the synchronization state of the frequency layer changes.

In addition, the embodiment of the present invention further provides an apparatus for synchronizing a packet network, comprising a synchronization state message processing module, wherein
the synchronization state message processing module is configured to know synchronization states of a frequency layer and a time layer of an upstream reference source and/or an upstream node and decide whether to perform protection switching and/or trace the upstream reference source according to upstream synchronous state information carried in a received Precision Time Protocol (PTP) message of the time layer.

Preferably, the synchronization state message processing module is configured to: when the phase lock loop of the frequency layer is known to be unlocked or a quality of a clock link is known to be degraded according to the synchronous state information,
if there is a protection path, switch to the protection path and generate new synchronous state information according to the synchronous state information of the upstream node and the operating mode of the phase lock loop of the frequency layer of the present node and/or the SSM QL state of the frequency layer of the present node and announce the new synchronous state information to the downstream node through the PTP message; and
otherwise, generate new synchronous state information according to the synchronous state information of the upstream node and the operating mode of the phase lock loop of the frequency layer of the present node and/or the SSM QL state of the frequency layer of the present node and announce the new synchronous state information to the downstream node through the PTP message;
wherein the synchronization state of the frequency layer at least comprises an operating mode of the phase lock loop and/or a SSM QL state; and the synchronization state of the time layer at least comprises an on/off state of a time link, and whether to manually configure system time of the device.

Preferably, the synchronization state message processing module is configured to use the following BMC algorithm when protection switching is performed: firstly comparing clock parameters and then comparing GM ids;
wherein the clock parameters comprise priorities, clock classes and accuracies.

Preferably, the synchronization state message processing module is configured to decide whether to trace the upstream reference source according to the following tracing rule if it is known that the phase lock loop is unlocked or the quality of the clock link degrades according to the synchronization state information:
if the upstream reference source is traceable and a reference source parameter strategy is satisfied, tracing the upstream reference source; otherwise not tracing the upstream reference source and entering a hold mode;
wherein satisfying the reference source parameter strategy refers to that the requirements of any one or more combinations of the following parameters are satisfied: a quality level, a clock accuracy, and the type of the time source.

Preferably, the apparatus further comprises a tracing rule module, configured to provide a tracing rule to the synchronization state message processing module;
wherein the tracing rule specifically comprises:
for frequency synchronization, if the upstream frequency source is traceable and the reference source parameter strategy is satisfied, tracing the upstream frequency reference source; otherwise, not tracing the upstream frequency reference source, and the frequency entering a hold mode; and
for time synchronization, if the upstream frequency source and time source are traceable and the reference source parameter strategy is satisfied, tracing the upstream time reference source; otherwise, not tracing the upstream time reference source and the time entering a hold mode.

In addition, the embodiment of the present invention further provides a system for synchronizing a packet network comprising any one synchronization state detection module and synchronization state message generation module as described above and any one synchronization state message processing module as described above.

In conclusion, the embodiments of the present invention uses a mechanism of processing association between a frequency layer and a time layer in a packet synchronous network, i.e., mapping these synchronous states into a PTP message of the time layer according to a state of a phase lock loop of the frequency layer and a state of a link of the time layer of the synchronous device in accordance with a certain message generation rule; and then quickly announcing these synchronization state messages to a downstream synchronous device, so that the downstream can quickly know the states of the reference source and the upstream synchronous link, and perform protection switching of the reference source or the synchronous path according to the state information carried in the PTP message, to decide whether to trace the upstream frequency source and time source.

The embodiments of the present invention realize processing association between a frequency layer and a time layer, generating a message and quickly announcing to a downstream network, so that a downstream synchronous device can perform corresponding processing, avoiding the problem that the downstream network cannot normally switch when a reference source and an upstream synchronization link fail, and also an end device is capable of entering a hold mode in time, thus improving the synchronization performance of a synchronous network.

### Brief Description of Drawings

The accompanying drawings described herein are used to provide a further understanding of the present invention and constitute a part of this application, and the schematic embodiments of the present invention and the descriptions thereof are used to explain the present invention and do not constitute an improper definition of the present invention. In the accompanying drawings:
Fig. 1 is a diagram of a state transition relationship of a time source of a synchronous node;
Fig. 2 is a diagram of a state transition relationship of a state message generation rule of a T-GM;
Fig. 3 is a diagram of a state transition relationship of a state message generation rule of a T-BC;
Fig. 4 is a diagram of state message generation and processing of a T-GM node;
Fig. 5 is a diagram of state message generation and process ingof a T-BC node;
Fig. 6 is a diagram of a normal condition of a ring topology synchronous network;
Fig. 7 is a diagram of a ring topology synchronous network-frequency path switching;
Fig. 8 is a diagram of a ring topology synchronous network-frequency and time path switching;
Fig. 9 is a diagram of a comparison algorithm of BMC data sets in the related art;
Fig. 10 is a diagram of an improved comparison algorithm of BMC data sets according to an embodiment of the present invention;
Fig. 11 is a diagram of mapping a SSM QL state of a frequency layer into a PTP message according to an embodiment of the present invention;
Fig. 12 is a structural diagram of a synchronous apparatus of a packet network according to an embodiment of the present invention;
Fig. 13 is a structural diagram of another synchronous apparatus of packet network according to an embodiment of the present invention; and
Fig. 14 is a structural diagram of another synchronous apparatus of packet network according to an embodiment of the present invention.

### Preferred Embodiments of the Present Invention

The embodiments of the present invention provide a synchronous solution of a packet network, so that a time layer can know a state of a frequency layer and takes corresponding linkage actions. For example, when it is detected that the phase lock loop of the frequency layer is unlocked or an SSM QL degrades, at this time, in addition to the degradation of the clock QL being transmitted by the frequency layer to the downstream, the time layer also needs to be announced, and the state of the frequency layer is mapped into a PTP message of the time layer, and is quickly announced to a downstream network. In addition, the state of a synchronous link of the time layer also needs to be mapped into the PTP message, and is quickly announced to a downstream network device. With the above method, the downstream synchronous device can know states of a reference source and an upstream synchronous link, and perform corresponding processing according to these messages.

The apparatus for synchronizing a packet network according to the present embodiment includes the following modules:
A. a frequency layer processing module, which uses the ITU-T G.826x series of frequency synchronization standard specifications to perform processing such as establishment of a frequency synchronous network topology, selection of a clock source, locking of the clock source etc.;
B. a time layer processing module, which uses the IEEE-1588v2 time synchronization specifications to perform processing such as establishment of a time synchronous network topology, selection of a clock source, accurate time synchronization etc.;
   except for the above existing basic modules, in order to implement association of the frequency layer and the time layer in the synchronous device as well as state message generation, announce and processing, the above apparatus further includes the following modules:
C. a synchronization state message generation module, configured to detect current synchronization states of the frequency layer and the time layer, including an operating mode of a phase lock loop of the frequency layer, a SSM QL state of the frequency layer, and an on/off state of a time link etc.; and then map the current synchronization state into a related field of the PTP message.
   At a head node T-GM and an intermediate node T-BC, the device needs to generate a synchronization state message and announce it to the downstream; and the T-TSC, as an end node, doesn't need to generate the synchronization state message and only needs to analyze the state message, deciding whether to continue to trace the upstream reference source.
D. a synchronization state message processing module. A downstream device may perform corresponding processing according to synchronization state information of the upstream carried in the received PTP message: with respect to the intermediate node T-BC, if it can be switched to a protection path, executing an improved BMC algorithm to perform protection switching, and generating a new state message and announcing it to the downstream; and if it cannot be switched to the protection path, generating a new state message and announcing it to the downstream. With respect to an end T-TSC node, protection switching cannot be performed, and there is no need to generate a new state message, and it is decided whether to continue to trace the upstream reference source according to the synchronization state information.
E. a tracing rule module, used to provide a specific tracing rule. The downstream device decides whether to trace the upstream reference source according to specific values of timeTraceable, frequency Traceable, clockClass, timeSource and clockAccuracy in the PTP message and a combination of various fields. A basic tracing principle thereof is that if the upstream reference source is traceable and a reference source strategy is satisfied (for example, requirements of any one or more of the following clock source parameters are satisfied: a quality level, a clock accuracy, and the type of the time source etc.), the upstream reference source is traced; otherwise, a hold mode is entered.

A method for synchronizing a packet network according to the present embodiment includes the following steps:
in step 1, a synchronous device establishes a synchronous link topology of a frequency layer according to an SSM protocol or based on the G.8265.1 PTP protocol, and performs frequency synchronization;
in step 2, the synchronous device establishes a synchronous link topology of a time layer according to a PTP protocol, and performs time synchronization;
in step 3, the synchronous device (including a head node GM and an intermediate synchronous device) detects current states of the frequency layer and the time layer, and with respect to the frequency layer, it needs to detect an operating mode of the phase lock loop and/or a SSM QL; and with respect to the time layer, it needs to detect whether interruption occurs in an Announce message link or an upstream GPS reference source; and amend a corresponding field of the PTP message according to these state information and transmit it to the downstream node;
in step 4, with respect to the synchronization state message, it needs to be announced to the downstream network and the end synchronous device; and with respect to a normal PTP message, it is announced by using an existing message transmission mechanism;
in step 5, with respect to the T-BC device, after receiving the PTP state message, if there is a protection path, whether to perform protection switching is decided, and a new state message is generated and announced to the downstream; otherwise, if there is no protection path, a new state is generated and announced to the downstream; wherein the generation of the new state message needs to be according to the PTP state message of the upstream and the operating mode of the phase lock loop of the frequency layer of the device itself;
in step 6, with respect to the T-TSC device, it needs not to generate a new state message, and it cannot be switched to the protection path; in addition, as the T-TSC has a better hold performance, after receiving the PTP state message, the T-TSC device decides whether to continue to trace the upstream frequency source and time source according to the above tracing rule.

With the above solution, the association of the frequency layer and the time layer in the packet network is implemented, i.e., a synchronization state message is generated according to the operating mode of the phase lock loop of the frequency layer, the SSM QL of the frequency layer and an on/off state of the time link and is announced to the downstream node, and the downstream node performs corresponding processing. For example, when the frequency layer detects that the SSM QL degrades, at this time, in addition to the degradation of the clock QL being transmitted by the frequency layer to the downstream, the time layer also needs to be announced, and the SSM QL of the frequency layer is mapped into a PTP message of the time layer and is announced to a downstream network. With the solution, the linkage of the frequency layer and the time layer is implemented, which improves the synchronization performance of the packet synchronous network.

The embodiments of the present invention will be described in detail in conjunction with accompanying drawings hereinafter. It should be illustrated that without conflict, the embodiments in the application and the features of the embodiments can be randomly combined with each other.

In the embodiments of the present invention, the synchronization state message processing module and the synchronization state message generation module include one or more of the followings in the related field mapped in the PTP message according to the current synchronization state:
(1) a flagField field in the header of the PTP message includes two information, i.e., timeTraceable information and frequencyTraceable information, wherein the frequency Traceable defines whether to follow the frequency reference source, and if so, it is TRUE; otherwise, it is FALSE; and the timeTraceable defines whether to follow the time reference source, and if so, it is TRUE; otherwise, it is FALSE;
(2) a timeSource field carries type information of the clock source, which includes GPS, PTP etc.;
   For example, 0x20 represents a GPS source, 0xa0 represents an internal clock and 0x60 represents a manually configured source.
(3) a clockClass field carries QL information of the clock source, which is used for source selection of the time layer and protection switching;
   For example, 6 represents that it is normal, 7 represents entering a hold mode, 255 represents that it is unavailable, 187 represents that a bearing device enters a hold mode and so on.
(4) a clockAccuracy field carries clock accuracy information, which is used for source selection of the time layer and protection switching;
(5) a stepsRemoved field carries hop count information, i.e., hop count information from the synchronous device to a GM device.

With the above information and various combinations thereof, the downstream device can know states of the frequency synchronous link and time synchronous link of the reference source and the upstream device. When the upstream device fails or its quality degrades, the downstream device can be switched to other links or reference sources, or decides whether to continue to trace the upstream frequency source and time source.

The synchronous node is divided into two layers, i.e., a frequency layer and a time layer. There are four modes for the state of the frequency layer, which respectively are:
(a1) a self-vibration mode, a device clock (internal clock) is used for driving at this time;
(a2) a capture mode, if a frequency source is accessed/discovered just now, a capture mode is entered at this time;
(a3) a lock mode, after a frequency source is locked, an external frequency source will be used for driving instead of the present device clock;
(a4) a hold mode, after it is locked, if a frequency source is lost, the hold mode is entered;

In addition, the state of the frequency layer further includes a SSM QL state.

The state of the time layer is divided into three cases:
(b1) the time link is on, and an external time source is used for driving at this time (the type of the time source timeSource = upstream source);
(b2) the time link is off, and no system time is configured, and the system time is a random value at this time, and the node can not be used as a time source at this time; (the type of the time source is an internal clock);
(b3) the time link is off and system time is configured, and the node may be used as a time source to drive the downstream node at this time (the type of the time source is manual configuration);

It should be noted that when an upstream time source is accessed, the system time of the present device is invalid automatically.

The synchronization state message generation module can generate a synchronization state message according to the following state message generation rule:
when the clock state of the synchronous device changes, it needs to announce it to the downstream node in real time; it relates to amendments of fields such as clockClass, timeSource, timeTraceable and frequencyTraceable of the PTP message; in addition, the synchronous device needs to distinguish between a head node T-GM, an intermediate node T-BC and an end node T-TSC; The T-GM node is used to connect the RRTC reference source, which generally uses a two-class clock; and the T-BC node is used for synchronization and transfer of the reference source, which generally uses a three-class clock; and the T-TSC is a synchronous device of the end node, which generally also uses a crystal oscillator similar to the two-class clock.

### 1. ClockClass generation rule

when the synchronization state of the synchronous network (including a state of a frequency layer (an operating mode of the clock phase lock loop, a SSM protocol state such as a SSM QL state etc.), an on/off state of a time link, whether to manually configure the system time) changes, it results in a change of the clockClass; i.e., amending the clockClass and announcing it to the downstream network. The generation of the clockClass needs to consider the following factors:

### (1) the state of the frequency layer

The state of the frequency layer primarily includes two aspects. One aspect is the operating mode of the phase lock loop of a physical layer, and the other aspect is a SSM protocol state (an SSM QL state).

Different operating modes of the phase lock loop generate different influences on the stability and accuracy of the clock synchronization. Therefore, it needs to correspond to different clock classes, for example,
- when the device clock is a two-class clock, in the self-vibration mode, the configured clock class is 53; in the capture mode, the configured clock class is 56; in the lock mode, the configured clock class is 6; and in the hold mode, the configured clock class is 7;
- when the device clock is a three-class clock, in the self-vibration mode, the hold mode or the capture mode, the configured clock class is 187; and in the lock mode, the configured clock class is 6;
- if the value of clockClass is not configured, a default value 248 is used;
- if the reference source per se carries the clockClass information, it can be directly mapped into the clockClass.

The mapping relationship between the SSM QL and the PTP clockClass according to the embodiment of the present invention may use the following mapping method in the following table 1:

**Table 1: Mapping relationship between the clock QL and the PTP clockClass**

| **SSM QL** | **G.781** | | | **PTP clockClass** |
|---|---|---|---|---|
| | **Option I** | **Option II** | **Option III** | |
| 0001 | | QL-PRS | | 80 |
| 0000 | | QL-STU | QL-UNK | 82 |
| 0010 | QL-PRC | | | 84 |
| 0111 | | QL-ST2 | | 86 |
| 0011 | | | | 88 |
| 0100 | QL-SSU-A | QL-TNC | | 90 |
| 0101 | | | | 92 |
| 0110 | | | | 94 |
| 1000 | QL-SSU-B | | | 96 |
| 1001 | | | | 98 |
| 1101 | | QL-ST3E | | 100 |
| 1010 | | QL-ST3/ QL-EEC2 | | 102 |
| 1011 | QL-SEC/ QL-EEC1 | | QL-SEC | 104 |
| 1100 | | QL-SMC | | 106 |
| 1110 | | QL-PROV | | 108 |
| 1111 | QL-DNU | QL-DUS | | 110 |

The present invention is not limited to the above mapping value. According to actual requirements, for example, different clock QL and hold performances of device etc., it can also be mapped to other clockClass values.

In addition, using the SSM protocol state, the synchronization state of the frequency layer may be known by us, for example, whether it is locked, whether the QL-PRC or the QL-EEC is locked; and the SSM protocol can provide more information;

### (2) the on/off state of the time link

- in a case that the upstream time source link can perform normal communication, factors which influence the clockClass are primarily device clockClass and the operating state of the phase lock loop, and the mapping rule is as described above;
- in a case that the upstream time source link is interrupted, if no system time is configured at this time, the present device can not be used as a time source; and if the system time is configured, the present device is upgraded to a time source, and the present device clock (in an unlock mode) or an upstream clock source (in a lock mode) is used to drive the time and synchronize the downstream network;

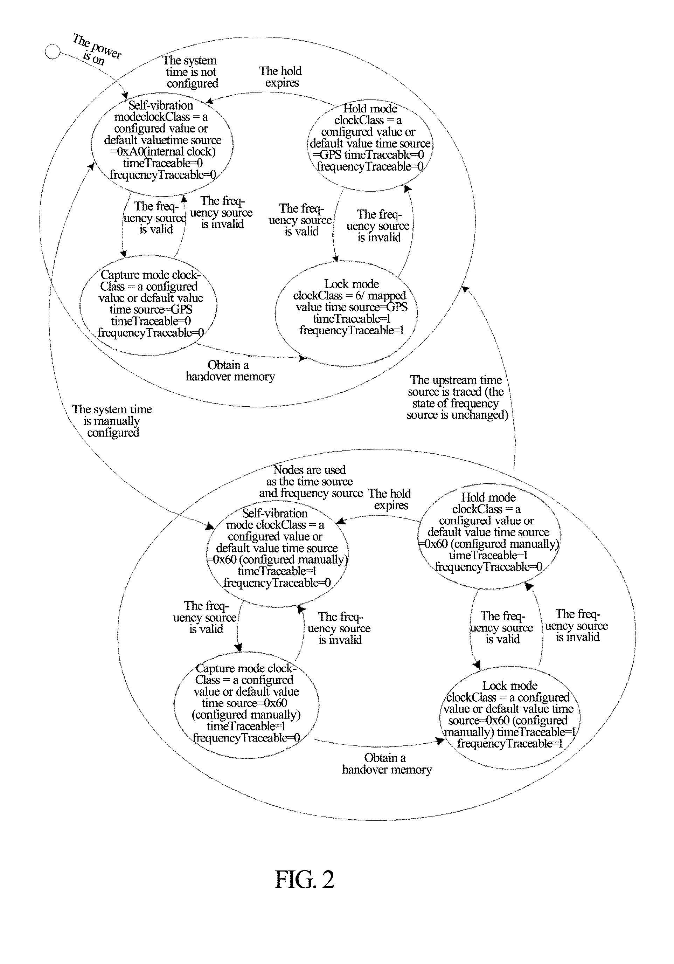

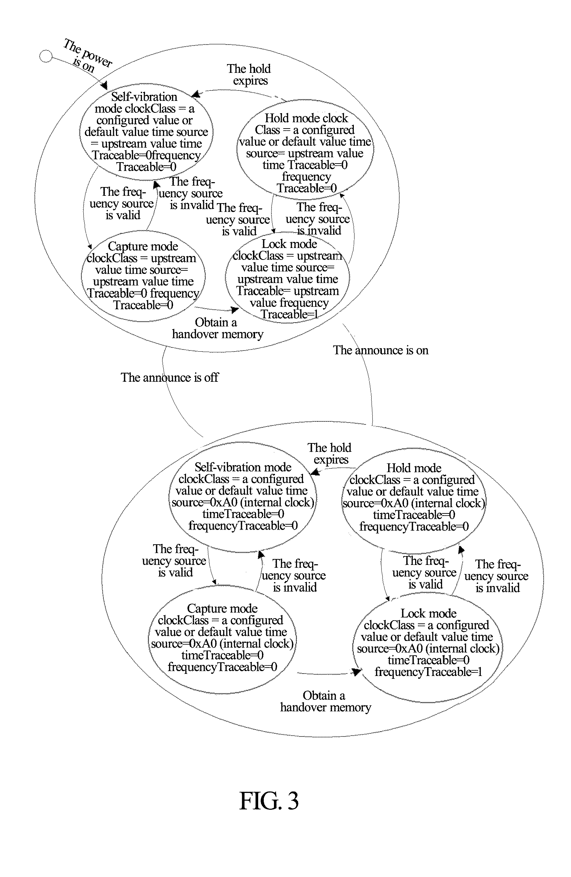

In different synchronization states, the generation rule of the clockClass is as shown in Figs. 2 and 3.

### 2. timeSource generation rule

The T-GM node is used to connect the time source and the frequency source. If there is no time source, it needs to manually configure the system time. The types of the time source include GPS time, manually configured time, an internal clock (the clock of the GM node is used to drive time); and when the system time is manually configured, the T-GM is used as a time source.

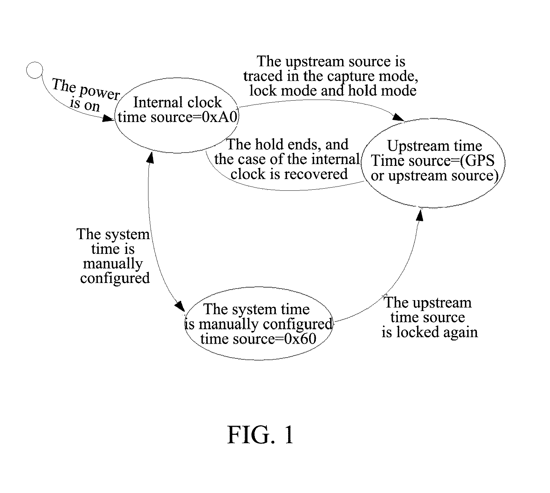

The state transition relationship of the time source is as shown in Fig. 1, and is described as follows.
(1) after the device is powered on and is initialized, the type of the T-GM device clock is an internal clock. That is, the T-GM has not locked frequency source and time source at this time. At this time, the clock of the T-GM device per se provides frequency and time synchronization services to the downstream.
(2) if the GPS time source is locked, the clock type of the T-GM device is GPS time. At this time, the T-GM is locked to the GPS reference source, and the downstream synchronization network is synchronized by using the GPS time. When the GPS source is invalid, the T-GM device enters a hold mode; and after holding for a period of time, the T-GM device enters an internal clock mode.
(3) if there is no available GPS reference source, it needs to manually configure system time on the T-GM device and synchronizes the downstream synchronous network by using the clock and time of the device per se. After the GPS reference source is locked again, the manually configured system time is invalid automatically, and the downstream network is synchronized by using the GPS time.

In different synchronization states, the timeSource generation rule is as shown in Figs. 2 and 3.

### 3. timeTraceable generation rule

in a case that the time is not manually configured, i.e., the upstream time source is valid at this time, if the phase lock loop of the present device is in a lock mode and timeTraceable=1 is transferred by the upstream, timeTraceable=1 is generated, otherwise timeTraceable=0 is generated;
in a case that the time is not manually configured, i.e., the upstream time source is valid at this time, if the SSM QL of the clock source locked by the present device is QL-PRC and timeTraceable=1 is transferred by the upstream, timeTraceable=1 is generated, otherwise timeTraceable=0 is generated;
in a case that the time is manually configured, i.e., the upstream time source is interrupted at this time, and the present device is upgraded to the time source, timeTraceable=1 is generated;
the timeTraceable has transferability, i.e., as long as timeTraceable=0 for a certain upstream node, timeTraceable of the downstream node is 0;

In different synchronization states, the timeTraceable generation rule is as shown in Figs. 2 and 3.

### 4. frequencyTraceable generation rule

If the phase lock loop of the present device is in a lock mode, frequency Traceable=1 is generated; and if the phase lock loop is in other operating modes, frequency Traceable=0 is generated.

If the SSM QL of the clock source locked by the present device is QL-PRC, frequency Traceable=1 is generated; and if the SSM QL is another value, frequency Traceable=0 is generated.

When the frequency synchronous path and the time synchronous path are inconsistent, for example the synchronous network, the frequency layer and the time layer of SyncE+1588 are independent of each other, the frequency Traceable does not have transmissibility; otherwise, if the paths are consistent, the frequency Traceable has transmissibility.

In different synchronization states, the timeTraceable and frequencyTraceable generation rules are as shown in Figs. 2 and 3.

It can be seen from Figs. 2 and 3 that the frequencyTraceable generation rule has the following features:
1) after the system time is manually configured, the timeTraceable is 1; and if it is an internal clock, the node is used as a time source and a frequency source;
2) only when the present node is used as a reference source or in a lock mode, the frequencyTraceable is 1 and it is 0 in other cases;
3) only when the present node is used as reference source or the SSM QL is QL-PRC, the frequencyTraceable is 1 and it is 0 in other cases;
4) there are three states for the time source, i.e., an internal clock, manual configuration and an upstream source.

Correspondingly, the processing of the synchronization state message performed by the synchronization state message processing module includes:
(1) executing an improved BMC algorithm to perform selection of the reference source or switching of the synchronous link according to the received upstream synchronization state information;

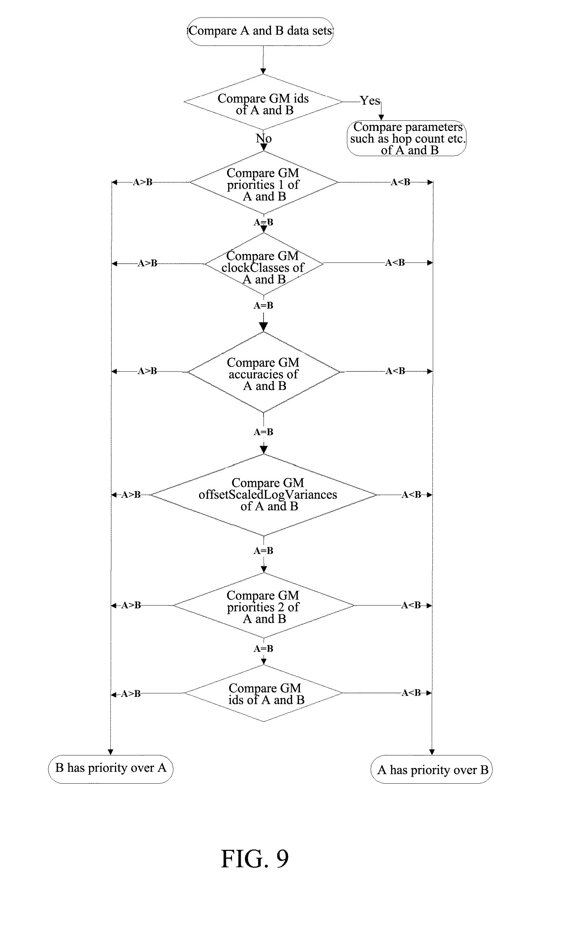

As shown in Fig. 9, the BMC algorithm of the IEEE-1588v2 comprises firstly comparing GM ids, and then comparing clock parameters (parameters such as clockClasses, priorities, accuracies etc.); i.e., if the GM ids are the same, considering that the parameters of the clock source are also the same, and directly comparing the hop counts instead of comparing the parameters of the clock source; and only if the GM ids are different, comparing parameters of the clock source. Therefore, when a fault occurs, for example the clock source is normal and the quality of the intermediate link degrades, although the clock parameter changes, the GM id does not change, and therefore the downstream will not be switched to other links.

The improved BMC algorithm comprises firstly comparing clock parameters and then comparing GM ids. In this way, when the quality of the intermediate link degrades, although the GM id does not change, the downstream can still be switched to other links, thereby improving the quality of synchronization.
(2) hold-off processing: in the process of frequency switching, unlock and capture states occur in a short time. If the time is short enough, the frequency has a small change; but if the time of the unlock state is long, the frequency has a large change, and at this time the degradation of quality is announced to the time layer and the protection switching is performed. That is, the state of the phase lock loop of the frequency layer is an unstable state, and it needs to be announced to the time layer only after the state is stable, so as to improve the stability of the time network. Therefore, when the state of the frequency layer changes, it needs to generate a state message and announce it to the time layer after one hold-off time, and the hold-off time is configurable.
(3) deciding whether to trace the upstream frequency source and time source according to the received upstream synchronization state message based on a set tracing rule.

There are two processing methods used by the tracing rule modules, which includes:

### 1) PTP announce message method

A downstream synchronous device decides whether to trace the upstream reference source according to specific values of timeTraceable, frequency Traceable, clockClass, timeSource and clockAccuracy in the Announce message and a combination of various fields. A basic principle thereof is that if the upstream reference source is traceable and clock parameters of a reference source are satisfied, the upstream reference source is traced; otherwise, a hold mode is entered.

The tracing rule is as follows:
rule 1: frequency source tracing rule
for frequency synchronization, it needs to analyze parameters such as clockClass, timeSource and frequency Traceable etc. of the state message, and when the upstream frequency source is traceable and the reference source parameter strategy is satisfied, tracing the upstream frequency source; otherwise, the frequency entering a hold mode; and
rule 2: time source tracing rule
for time synchronization, it needs to analyze parameters such as clockClass, timeSource frequency Traceable and timeTraceable etc. of the state message, and when both the upstream frequency source and time source are traceable and the reference source parameter strategy is satisfied, tracing the upstream time source; otherwise, the time entering a hold mode; and

### 2) PTP event message method

In accordance with the existing IEEE-1588v2 standard specifications, an event message (for example a sync message) carries timestamp information. When the event message is received, the synchronous node will calculate a path delay and an offset according to the PTP protocol and correct the time offset.

When the reference source is not traceable, the time will still be corrected according to the existing standard specification, which reduces the synchronization performance. An improved method comprises amending the definition of the existing IEEE-1588v2 standard specification, so that the timeTraceable and frequency Traceable are meaningful in the Announce message and are also meaningful in the event message. In this way, when the reference source is not traceable, timeTraceable and/or frequency Traceable=0; and when the synchronous node receives the PTP event message, whether the reference source is traceable is firstly judged, and if it is traceable, the upstream time source and/or frequency source is traced; otherwise, the hold mode is entered;
rule 3: frequency source tracing rule

If frequency Traceable=1 for the event message, the upstream frequency source is traced; otherwise, the hold mode is entered;
rule 4: time source tracing rule
if timeTraceable=1 for the event message, the upstream time source is traced; otherwise, the hold mode is entered, i.e., the calculation of the timestamp and the correction of the time offset in the message are not utilized.

In addition, the tracing rule in the embodiments of the present invention also allows using other combinations in the above PTP message field to judge whether to trace the upstream frequency source and time source.

### Embodiment one

The embodiment primarily relates to a procedure of generating and processing a state message of a T-GM node.

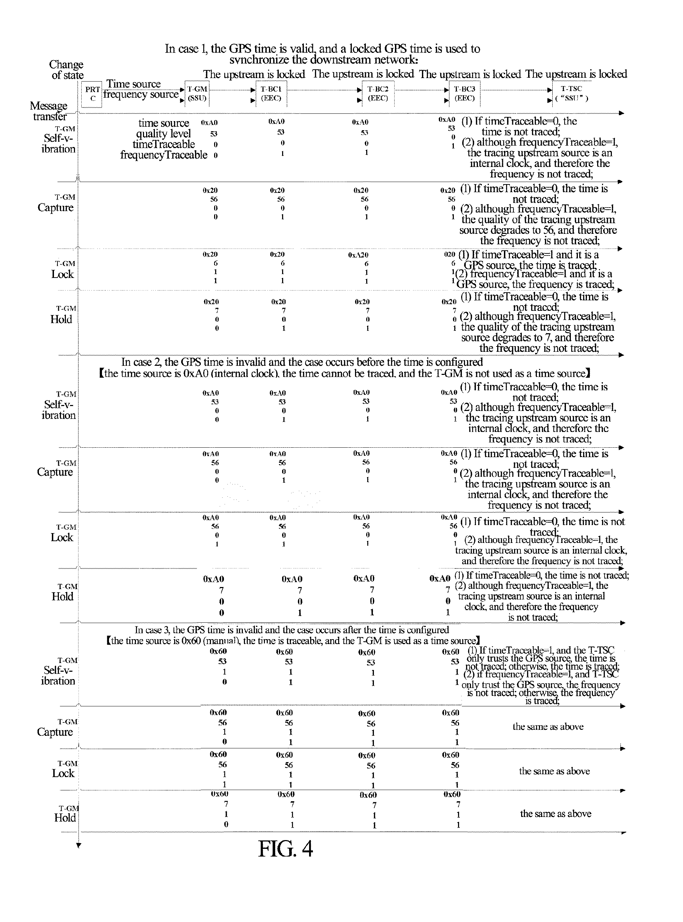

As shown in Fig. 4, the T-GM node is connected to a PRTC device, to provide a frequency source and a time source to the downstream synchronous network. Assuming that the GPS reference source is valid and the T-GM uses a two-class clock, after the T-GM is powered on, the T-GM locks the GPS and synchronizes the downstream node. In addition, assuming that the synchronous link of the downstream node belongs to a chain topology, i.e., the downstream cannot be switched to other reference sources; and finally assuming that the frequency layer of the downstream node is locked to the upstream node, the PTP link can also normally perform communication. The steps for generating, announcing and processing a message thereof are as follows.

In step 1, after the T-GM is powered on, the crystal oscillator of the device is in a self-vibration mode. At this time, the generated state message is timeSource=0xA0 (an internal clock); the clockClass=a configured value or a default value, for example 53, and if it is not configured, the default value is 248. timeTraceable=0 indicates that a GPS time source has not been found yet, frequencyTraceable=0 indicates that the frequency source has not been locked yet; and the generated synchronization state message is quickly announced to the downstream node T-BC1.

In step 2, after the T-BC1 receives the synchronization state message transmitted by the upstream, and it decides how to process in combination with the operating mode of the phase lock loop of frequency layer of the present device, the following operations will primarily be generated:
(1) according to parameters such as clockClass, executing an improved BMC source selection algorithm, to decide whether to be switched to other reference sources or a synchronous link. Due to a chain topology and no other backup reference source, the present node cannot be switched to other reference sources. Therefore, even if the quality of the upstream reference source degrades, it cannot be switched to other reference sources;
(2) generating a new synchronous state message in combination with the operating mode of the phase lock loop of the present device. The state message generation rule is shown in Fig. 3. As the present node is assumed to be in a lock state, the clockClass is upstream QL 53, the timeSource is an upstream source type 0xAO (an internal clock), timeTraceable is an upstream value 0 (the upstream time source is not traceable), and frequency Traceable is 1, since the current phase lock loop is in a lock state.

In step 3, the synchronization state message is quickly announced to the downstream node. In the existing IEEE-1588v2 specification, it needs to wait for the expiration of the Announce transmission interval to perform transmission, so that the announce time of the message is long. In order to perform quick announce, it needs to amend the existing message transmission procedure, i.e., after receiving the upstream synchronization state message, generating a new synchronous state message according to the operating mode of the phase lock loop of the present device, and immediately transmitting it to the downstream node, without waiting for the expiration of the transmission interval.

In step 4, two devices T-BC2 and T-BC3 are also intermediate synchronous devices, and are also assumed to be in a lock state. The processing thereof are the same as those of the T-BC1, i.e., the synchronization state message transmitted by the upstream will not be amended, and is copied directly and forwarded to the downstream.
in step 5, at the T-TSC node, it has a clock similar to the SSU; and as an end node, when there is a fault in the upstream synchronous network, for example, the upstream reference source is not traceable or the quality of the upstream reference source degrades, it cannot be switched to other reference sources and can only enter a hold mode and is driven by a clock of its own. As shown in Fig. 4, in the received synchronization state message, timeSource=0xA0 indicates that the type of the upstream source is an internal clock. clockClass =53 indicates that the quality of the upstream source degrades; timeTraceable=0 indicates that the upstream time source is not traceable; frequencyTraceable=1 indicates that the phase lock loop of the upstream node is in a lock state, which can not reflect that the upstream frequency source is traceable, and therefore, whether it needs to trace the frequency needs to be judged in combination with other fields;
- the frequency is not traced. Although frequencyTraceable=1, the type of the upstream source is an internal clock, and the QL degrades; therefore, the upstream frequency source is not traced according to rule 1;
- the time is not traced. timeTraceable=0 indicates that the upstream time source is not traceable, and the upstream time source is not traced according to rule 2;

Thus, T-TSC will not trace the upstream frequency source and time source, i.e., the T-TSC enters a hold mode and is driven by a clock of its own.

In step 6, after the phase lock loop of the T-GM enters a lock mode from the self-vibration mode and the capture mode, the generated state message is timeSource=0x20 (GPS source) at this time; the clockClass=6(normal); timeTraceable=1 indicates that the GPS time source is traced, and frequencyTraceable=1 indicates that the GPS frequency source is locked.

In step 7, the generated synchronization state message is quickly announced to the downstream T-BC node; if the downstream T-BC node is in a lock mode, and the PTP link is normal, these messages are copied and forwarded to the end T-TSC node.

In step 8, the T-TSC node analyzes the received state message. If it discovers that timeTraceable=1, clockClass is normal, and timeSource is a GPS source, the upstream time source is locked; in addition, if it discovers that frequency Traceable=1, clockClass is normal, and timeSource is a GPS source, the upstream frequency source is locked.

### Embodiment two

The present embodiment primarily relates to a procedure of generating and processing a state message of a T-BC node.

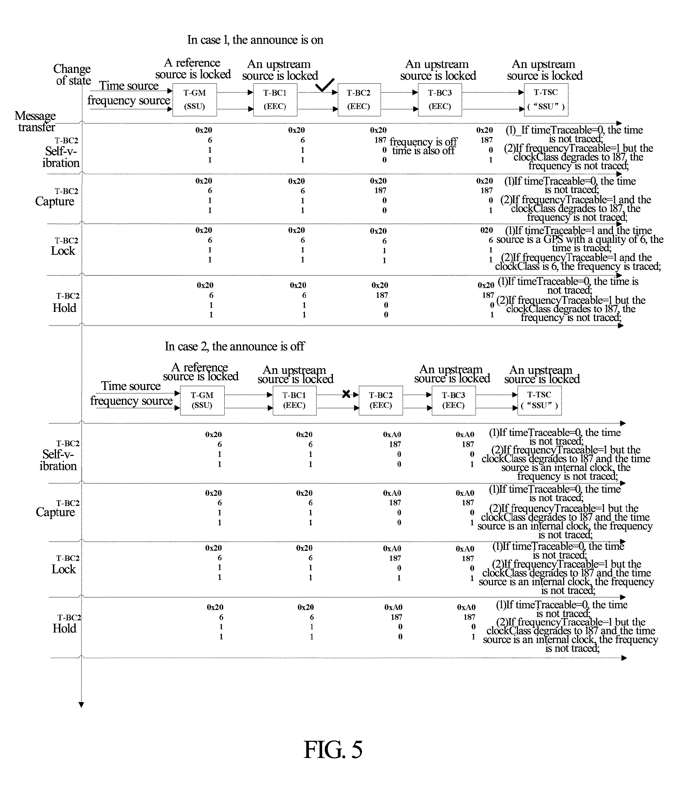

As shown in Figs. 3 and 5, assume that phase lock loops of other nodes except for the T-BC2 are in a lock mode and the time link is normal; if the PTP link between the T-BC1 and T-BC2 is normal;

In step 1, assume that the phase lock loop of the T-GM is in a lock mode. At this time, the generated state message is timeSource=0x20 (a GPS source); the clockClass=6 (normal); timeTraceable=1 indicates that a GPS time source is traced, frequencyTraceable=1 indicates that the frequency source is locked; and the generated synchronization state message is quickly announced to the downstream node T-BC1.

In step 2, the T-BC1 is in a lock mode, and it receives the synchronization state message transmitted by the upstream and primarily generates the following operations:
(1) according to parameters such as clockClass, executing an improved BMC source selection algorithm, to decide whether to be switched to other reference sources or a synchronous link. Due to a chain topology and no other backup reference source, the present node cannot be switched to other reference sources. Therefore, even if the quality of the upstream reference source degrades, it cannot be switched to other reference sources;
(2) generating a new synchronous state message in combination with the operating mode of the phase lock loop of the present device. The state message generation rule is shown in Fig. 3. As the present node is assumed to be in a lock state, the clockClass is upstream QL 6, the timeSource is an upstream source type 0x20 (GPS), timeTraceable is an upstream value 1 (the upstream time source is traceable), and frequency Traceable is 1, since the current phase lock loop is in a lock state; and the synchronization state message is quickly announced to the downstream node T-BC2.

In step 3, the T-BC2 is in a self-vibration mode, and therefore the generated state message is clockClass=187, i.e., the clock class needs to be degraded; timeSource=0x20 indicates that a GPS source can be traced; as the phase lock loop is not locked, both timeTraceable and frequency Traceable are 0; and the state message is announced to T-BC3.

In step 4, the T-BC3 is in a lock mode, and therefore frequency Traceable=1. Other parameters are unchanged and then the state message is quickly announced to the T-TSC node.
in step 5, at the T-TSC node, in the synchronization state message received by it, timeSource =0x20 indicates that the type of the upstream source is GPS. clockClass =187 indicates that the quality of the upstream source degrades; timeTraceable=0 indicates that the upstream time source is not traceable; frequencyTraceable=1 indicates that the phase lock loop of the upstream node is in a lock state, which can not reflect that the upstream frequency source is traceable, and therefore, whether it needs to trace the frequency needs to be judged in combination with other fields;
- the frequency is not traced. Although frequencyTraceable=1, the QL degrades; therefore, the upstream frequency source is not traced according to rule 1;
- the time is not traced. timeTraceable=0 indicates that the upstream time source is not traceable, and the upstream time source is not traced according to rule 2;

Thus, T-TSC will not trace the upstream frequency source and time source, i.e., the T-TSC enters a hold mode and is driven by a clock of its own.

In step 6, after the phase lock loop of the T-BC2 enters a lock mode from the self-vibration mode and the capture mode, the generated state message is timeSource=0x20 (GPS source) at this time; the clockClass=6(normal); timeTraceable=1 indicates that the GPS time source is traced, and frequencyTraceable=1 indicates that the GPS frequency source is locked.

In step 7, the generated synchronization state message is quickly announced to the downstream T-BC3 node; if the downstream T-BC3 node is in a lock mode, and the PTP link is normal, these messages are copied and forwarded to the end T-TSC node.

In step 8, the T-TSC node analyzes the received state message. If it discovers that timeTraceable=1, clockClass is normal and timeSource is a GPS source, the upstream time source is locked; in addition, if it discovers that frequency Traceable=1, clockClass is normal and timeSource is a GPS source, the upstream frequency source is locked.

### Embodiment three

The embodiment primarily relates to a procedure of protection switching of a T-BC node.

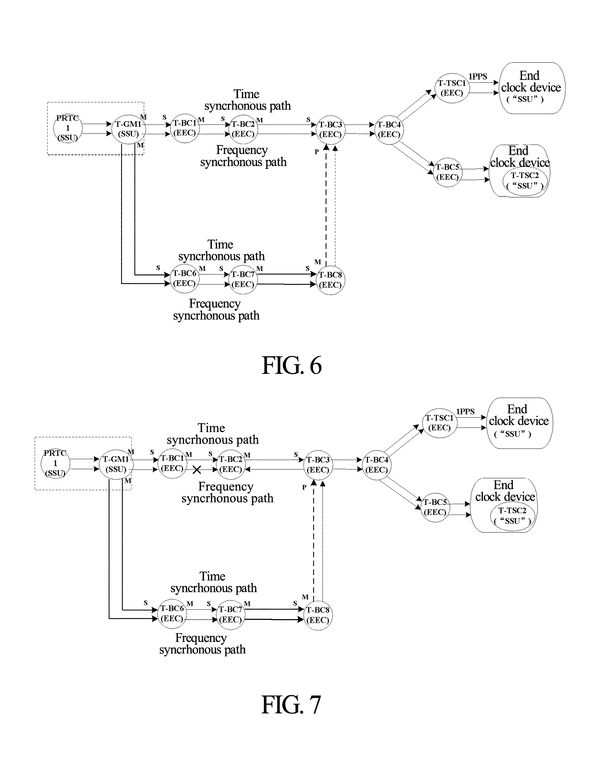

In the existing procedure of protection switching, in accordance with a standard specification, the frequency layer and the time layer are independent of each other, and there is no any association processing between both layers, as shown in Fig. 6.

As shown in Fig. 7, when there is a fault in a frequency link between the T-BC1 and the T-BC2, for example, when the T-BC2 can not receive a SSM message transmitted by the T-BC, the existing processing steps are as follows.

In step 1, a phase lock loop of the T-BC2 enters a hold mode, and a SSM message with QL=EEC is transmitted to the T-BC3;
in step 2, the T-BC3 executes the SSM algorithm and performs frequency path switching, i.e., the T-BC3 is locked to T-BC8, and transmits a SSM message with QL=PRC to the T-BC2;
in step 3, after the T-BC2 receives the QL message of the T-BC3, the T-BC2 is locked to the T-BC3;
in step 4, as the time layer and the frequency layer are independent of each other, the time layer can not be aware of the change of state of the frequency layer. Therefore, there is no change in the synchronous path of the time layer;
with the solutions according to the embodiments of the present invention, when there is a fault in the frequency layer of the upstream node (T-GM or T-BC) but the present node can not be switched to other clock sources or clock paths, it needs to generate a state message at this time and announces it to the downstream node that the quality degrades, and the downstream T-BC node performs protection switching.

As shown in Fig. 9, the BMC algorithm according to the IEEE-1588v2 specification generally comprises firstly judging the GM ids, and then judging the parameters of the clock source, for example, information such as clockClass, priorities and accuracies etc. That is, if the GM ids are the same, it is considered that the clock parameters are the same, and there is no need to perform comparison. Thus, the quality of the upstream synchronous link degrades, and the parameters of the clock source are amended, but the GM ids are unchanged, and the protection switching can not be completed according to the existing BMC algorithm.

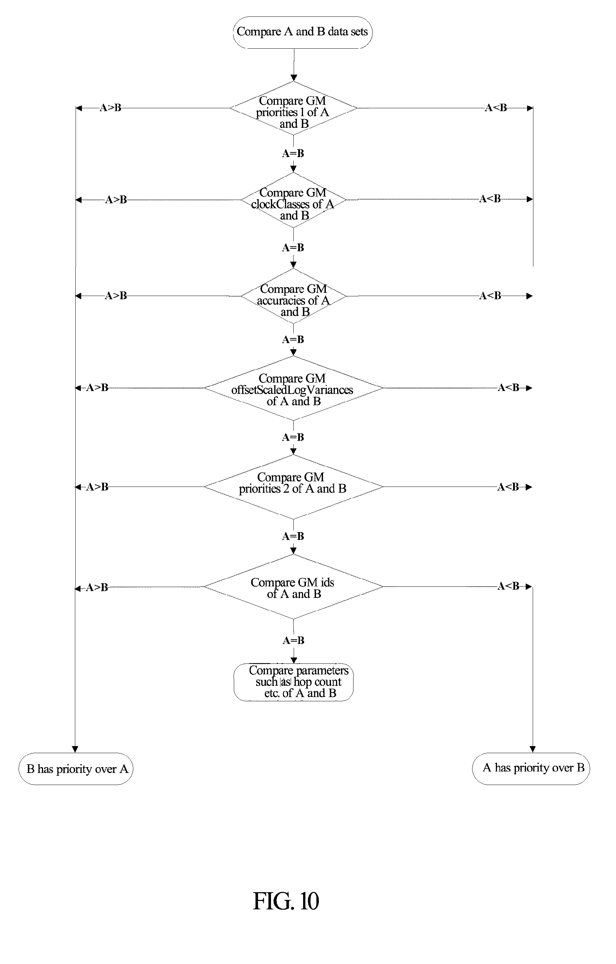

Therefore, the BMC algorithm is improved in the embodiments of the present invention. As shown in Fig. 10, the steps of the improved BMC algorithm are as follows.

In step 1, the parameters of the clock source are firstly compared, including parameters such as clockClass, priorities and accuracies etc.; and if these parameters are the same, one optimum primary clock is selected;

In step 2, if the parameters of the clock source are the same, GM ids are compared finally, and if GM ids are different, a clock with a small GM id is selected as the optimum primary clock; otherwise, if the GM ids are the same, other parameters such as hop count etc. are compared.

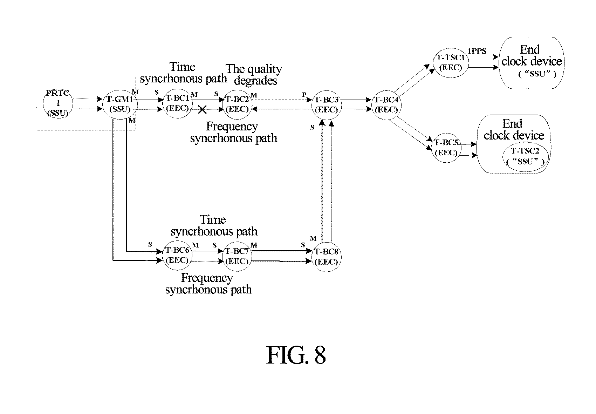

As shown in Fig. 8, according to the improved BMC algorithm, the steps of the protection switching include the following steps.

In step 1, after the phase lock loop of the T-BC2 enters the hold mode, a state message about the degradation of quality is transmitted to the T-BC3;
for example, the clockClass is amended from 6 (normal) to 187;

In step 2, the T-BC3 executes the improved BMC algorithm, and uses a clock corresponding to T-BC8 as the optimum primary clock. According to the improved BMC algorithm, the parameters of the clock source are firstly compared, for example, parameters such as clockClass etc. Due to the quality degradation of the time of T-BC2, it will be switched to the path of T-BC8.

### Embodiment four

The present embodiment primarily relates to the association of the SSM QL of frequency layer and the time layer;

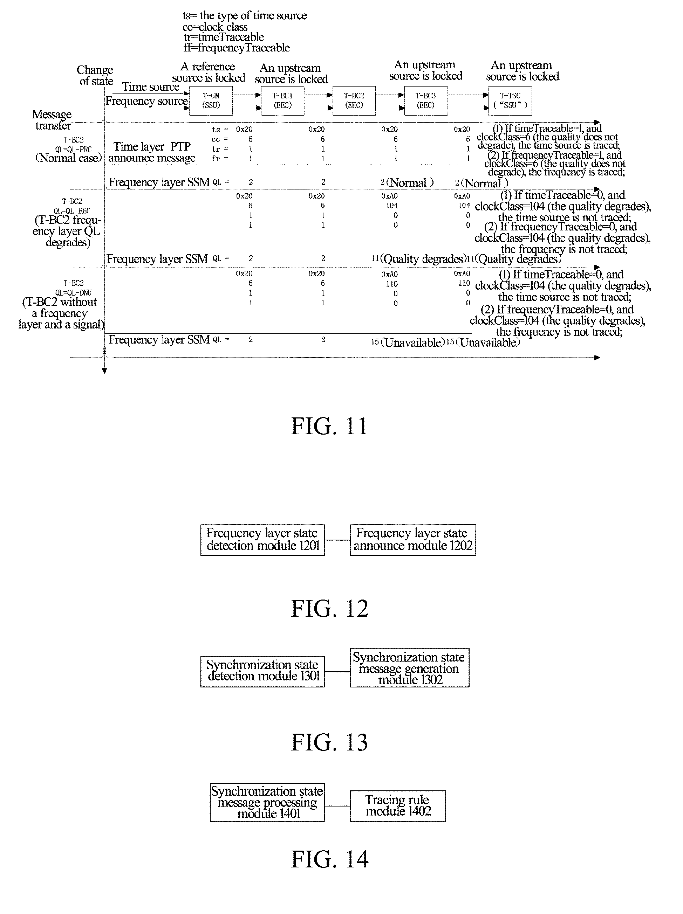

As shown in Fig. 11, the primary steps of the present embodiment are described as follows.
in step 1, in a normal case, the frequency layer is locked to the upstream clock source, and SSM QL=QL-PRC announced to the downstream at this time indicates that the device is locked to the PRC clock source;
in step 2, when a fault occurs in the frequency layer of the T-BC2 device, it results in the QL degrading to QL-EEC;
in step 3, the time layer of T-BC2 detects the SSM QL state of the frequency layer, and if it discovers that the QL degrades, it generates a new PTP announce message according to a mapping rule and announces it to the downstream;
in step 4, the downstream T-BC3 also detects that the SSM QL of the frequency layer degrades, generates a new PTP announce message and announces it to the downstream T-TSC;

In step 5, after receiving the PTP announce message from the upstream, the T-TSC analyzes the parameters in the message and decides whether to trace the upstream time source and frequency source.

In addition, the embodiments of the present invention further provide an apparatus for synchronizing a packet network applied in a synchronous device, as shown in Fig. 12, the apparatus comprising a frequency layer state detection module 1201 and a frequency layer state announce module 1202, wherein
the frequency layer state detection module 1201 is configured to detect a synchronization state of the frequency layer of the synchronous device; and
the frequency layer state announce module 1202 is configured to map a synchronization state of the frequency layer into a synchronization state message of a time layer, and announce the synchronization state message to the time layer, so that a downstream node of the time layer decides whether to perform protection switching and/or trace an upstream reference source according to the synchronization state of the frequency layer.

Preferably, the frequency layer state announce module 1202 is configured to map the synchronization state of the frequency layer into a Precision Time Protocol (PTP) message of the time layer and announce the time layer of the PTP message to the downstream node.

Preferably, the frequency layer state detection module 1201 is configured to detect an operating mode of a phase lock loop of the frequency layer;
the frequency layer state announce module 1202 is configured to announce the synchronization state of the frequency layer to the downstream node of the time layer when the frequency layer state detection module detects that the operating mode of the phase lock loop of the frequency layer changes.

Preferably, the frequency layer state detection module 1201 is configured to detect a Synchronization Status Message Quality Level (SSM QL) state of the frequency layer; and
the frequency layer state announce module 1202 is configured to announce the synchronization state of the frequency layer to the downstream node of the time layer when the frequency layer state detection module detects that the SSM QL state of the frequency layer changes.

In addition, the embodiments of the present invention further provide another apparatus for synchronizing a packet network applied in a synchronous device, as shown in Fig. 13, the apparatus comprising a synchronization state detection module 1301 and a synchronization state message generation module 1302, wherein
the synchronization state detection module 1301 is configured to detect synchronization states of a frequency layer and time layer of a synchronous device; and
the synchronization state message generation module 1302 is configured to map the synchronization states of the frequency layer and the time layer into a Precision Time Protocol (PTP) message of the time layer and announce the PTP message to a downstream node, so that the downstream node decides whether to perform protection switching and/or trace an upstream reference source according to the synchronization state.

Preferably, the synchronization state of the frequency layer detected by the synchronization state detection module 1301 at least comprises an operating mode of a phase lock loop and/or a Synchronization Status Message Quality Level (SSM QL) state of the frequency layer; and
the synchronization state of the time layer detected by the synchronization state detection module at least comprises an on/off state of a time link, and whether to manually configure system time of the device.

Preferably, the synchronization state message generation module 1302 is configured to map the synchronization states of the frequency layer and the time layer to the following synchronization state information in the PTP message according to a certain information generation rule:
traceable information of a frequency source, which maps whether to follow a frequency reference source;
traceable information of a time source, which maps whether to follow a time reference source;
clock source information, which maps the type of a clock source;
clock class information, which maps the quality level of the clock source;
clock accuracy information, which maps a clock accuracy; and
hop count information, which maps hop count information from the synchronous device to a GM device.

Preferably, the synchronization state message generation module 1302 is configured to generate the traceable information of the frequency source according to the following information generation rule:
if the phase lock loop of the present synchronous device is in a lock mode or the SSM QL is equal to a QL of the clock source, mapping the traceable information of the frequency source to following the frequency reference source; and if the phase lock loop of the present synchronous device is in a self-vibration mode, a capture mode or a hold mode or the SSM QL is equal to the QL of the present synchronous device, mapping the traceable information of the frequency source to not following the frequency reference source.

Preferably, the synchronization state message generation module 1302 is configured to generate the traceable information of the time source according to the following information generation rule:
when an upstream time link is on, if the phase lock loop of the present synchronous device is in a lock mode or the SSM QL is equal to a QL of the clock source, mapping the traceable information of the time source to following the time reference source; and if the phase lock loop is in a self-vibration mode, a capture mode or a hold mode or the SSM QL is equal to the QL of the present synchronous device, mapping the traceable information of the time source to not following the time reference source; and
when the upstream time link is off, if system time of the device is not manually configured, mapping the traceable information of the time source to not following the time reference source; and if the system time of the device is manually configured, mapping the traceable information of the time source to following the time reference source.

Preferably, the synchronization state message generation module 1302 is configured to map and generate the synchronization state information and announce the synchronization state information to the downstream node of the time layer after waiting for one delay time when the synchronization state of the frequency layer changes.

In addition, the embodiments of the present invention further provide another apparatus for synchronizing a packet network, as shown in Fig. 14, comprising a synchronization state message processing module 1401, wherein
the synchronization state message processing module 1401 is configured to know synchronization states of a frequency layer and time layer of an upstream reference source and/or an upstream node and decide whether to perform protection switching and/or trace the upstream reference source according to upstream synchronous state information carried in a received Precision Time Protocol (PTP) message of the time layer.

Preferably, the synchronization state message processing module is configured to: when the phase lock loop of the frequency layer is known to be unlocked or the quality of a clock link is known to be degraded according to the synchronous state information,
if there is a protection path, switch to the protection path and generate new synchronous state information according to the synchronous state information of the upstream node and the operating mode of the phase lock loop of the frequency layer of the present node and/or the SSM QL state of the frequency layer of the present node and announce the new synchronous state information to the downstream node through the PTP message; and
otherwise, generate new synchronous state information according to the synchronous state information of the upstream node and the operating mode of the phase lock loop of the frequency layer of the present node and/or the SSM QL state of the frequency layer of the present node and announce the new synchronous state information to the downstream node through the PTP message;
wherein the synchronization state of the frequency layer at least comprises an operating mode of the phase lock loop and/or an SSM QL state; and the synchronization state of the time layer at least comprises an on/off state of a time link, and whether to manually configure system time of the device.

Preferably, The synchronization state message processing module is configured to use the following BMC algorithm when protection switching is performed: firstly comparing clock parameters and then comparing GM ids;
wherein the clock parameters comprise priorities, clock classes and accuracies.

Preferably, the synchronization state message processing module 1401 is configured to decide whether to trace the upstream reference source according to the following tracing rule if it is known that the phase lock loop is unlocked or the quality of the clock link degrades according to the synchronization state information:
if the upstream reference source is traceable and a reference source parameter strategy is satisfied, tracing the upstream reference source; otherwise not tracing the upstream reference source and entering a hold mode;
wherein satisfying the reference source parameter strategy refers to that the requirements of any one or more combinations of the following parameters are satisfied: a quality level, a clock accuracy, and the type of the time source.

Preferably, the apparatus further comprises a tracing rule module 1402, configured to provide a tracing rule to the synchronization state message processing module;
wherein the tracing rule comprises:
for frequency synchronization, if the upstream frequency source is traceable and the reference source parameter strategy is satisfied, tracing the upstream frequency reference source; otherwise, not tracing the upstream frequency reference source, and the frequency entering a hold mode; and
for time synchronization, if the upstream frequency source and time source are traceable and the reference source parameter strategy is satisfied, tracing the upstream time reference source; otherwise, not tracing the upstream time reference source and the time entering a hold mode.

In addition, the embodiments of the present invention further provide a system for synchronizing a packet network comprising the synchronization state detection module and the synchronization state message generation module as described above and the synchronization state message processing module as described above.

The above description is only the preferred embodiments of the present invention and is not intended to limit the present invention. The present invention can have a plurality of other embodiments. Without departing from the spirit and substance of the present invention, those skilled in the art can make various corresponding changes and variations according to the present invention, and all these corresponding changes and variations should belong to the protection scope of the appended claims in the present invention.

Obviously, those skilled in the art should understand that each module or each step of the aforementioned present invention can be implemented with general computing devices, and they can be integrated in a single computing device or distributed in a network consisting of a plurality of computing devices; alternatively, they can be implemented with program codes executable by the computing devices, and therefore, they can be stored in storage devices to be executed by the computing devices; and in some cases, the illustrated or described steps may be performed in an order different from that described here; alternatively, they are respectively made into a plurality of integrated circuit modules; alternatively, it is implemented with making several modules or steps of them into a single integrated circuit module. Thus, the present invention is not limited to any specific combinations of hardware and software.

### Industrial Applicability

The embodiments of the present invention realize processing association between a frequency layer and a time layer, generating a message and quickly announcing to a downstream network, so that a downstream synchronous device can perform corresponding processing, avoiding the problem that the downstream network cannot normally switch when a reference source and an upstream synchronization link fail, and also an end device is capable of entering a hold mode in time, thus improving the synchronization performance of a synchronous network.

## Claims

1. A method for synchronizing a packet network, comprising:
a synchronous device mapping a synchronization state of a frequency layer into a synchronization state message of a time layer, and announcing the synchronization state message to a downstream node of the time layer, so that the downstream node of the time layer decides whether to perform protection switching and/or trace an upstream reference source according to the synchronization state message.

2. The method according to claim 1, wherein
the synchronous device maps the synchronization state of the frequency layer into a Precision Time Protocol (PTP) message of the time layer and announces the PTP message to the downstream node of the time layer.

3. The method according to claim 1 or 2, wherein
the synchronous device announces the synchronization state of the frequency layer to the downstream node of the time layer when detecting that an operating mode of a phase lock loop of the frequency layer changes.

4. The method according to claim 1 or 2, wherein
the synchronous device maps a Synchronization Status Message Quality Level (SSM QL) state of the frequency layer into a PTP message of the time layer and announces the PTP message to the downstream node of the time layer when detecting that the SSM QL state changes.

5. A method for synchronizing a packet network, comprising:
a synchronous device mapping detected synchronization states of a frequency layer and a time layer into a Precision Time Protocol (PTP) message of a time layer and announcing the PTP message to a downstream node, so that the downstream node decides whether to perform protection switching and/or trace an upstream reference source according to the synchronization state.

6. The method according to claim 5, wherein
the synchronization state of the frequency layer at least comprises an operating mode of a phase lock loop; and
the synchronization state of the time layer at least comprises an on/off state of a time link, and whether to manually configure system time of device.

7. The method according to claim 6, wherein
the synchronous device mapping detected synchronization states of a frequency layer and a time layer into a PTP message of a time layer comprises mapping the synchronization states of the frequency layer and the time layer to following synchronization state information in the PTP message:
traceable information of a frequency source, which maps whether to follow a frequency reference source;
traceable information of a time source, which maps whether to follow a time reference source;
clock source information, which maps the type of a clock source; and/or
clock class information, which maps a quality level of the clock source.

8. The method according to claim 7, wherein
the synchronous device mapping detected synchronization states of a frequency layer and a time layer into a PTP message of a time layer comprises mapping the synchronization states of the frequency layer and the time layer to following synchronization state information in the PTP message:
clock accuracy information which maps a clock accuracy; and/or
hop count information which maps hop count information from the synchronous device to a GM device.

9. The method according to claim 7, wherein an information generation rule for the traceable information of the frequency source comprises:
if the phase lock loop of the present synchronous device is in a lock mode, mapping the traceable information of the frequency source to following the frequency reference source; and if the phase lock loop of the present synchronous device is in a self-vibration mode, a capture mode or a hold mode, mapping the traceable information of the frequency source to not following the frequency reference source.

10. The method according to claim 7 or 9, wherein an information generation rule for the traceable information of the time source comprises:
when an upstream time link is on, if the phase lock loop of the present synchronous device is in a lock mode, mapping the traceable information of the time source to following the time reference source; and if the phase lock loop is in a self-vibration mode, a capture mode or a hold mode, mapping the traceable information of the time source to not following the time reference source; and
when the upstream time link is off, if the system time of the device is not manually configured, mapping the traceable information of the time source to not following the time reference source; and if the system time of the device is manually configured, mapping the traceable information of the time source to following the time reference source.

11. The method according to claim 5, wherein the synchronization state of the frequency layer at least comprises a SSM QL state;
the synchronous device mapping detected synchronization states of a frequency layer and a time layer into a PTP message of a time layer comprises mapping the synchronization state of the frequency layer to following synchronization state information in the PTP message: traceable information of a frequency source, which maps whether to follow a frequency reference source; and/or traceable information of a time source, which maps whether to follow a time reference source;
an information generation rule for the synchronization state information comprises:
if the SSM QL of the present synchronous device is equal to a QL of a clock source, mapping the traceable information of the frequency source to following the frequency reference source; and if the SSM QL of the present synchronous device is equal to a QL of the present synchronous device, mapping the traceable information of the frequency source to not following the frequency reference source;
when an upstream time link is on, if the SSM QL of the present synchronous device is equal to the QL of the clock source, mapping the traceable information of the time source to following the time reference source; and if the SSM QL of the present synchronous device is equal to the QL of the present synchronous device, mapping the traceable information of the time source to not following the time reference source; and
when the upstream time link is off, if system time of the device is not manually configured, mapping the traceable information of the time source to not following the time reference source; and if the system time of the device is manually configured, mapping the traceable information of the time source to following the time reference source.

12. The method according to claim 7, wherein an information generation rule for the clock class information comprises:
mapping the clock class information to clock quality levels corresponding to an operating mode of the phase lock loop of the frequency layer and a time link state.

13. The method according to claim 7 or 11, wherein
when the synchronization state of the frequency layer changes, the synchronization state information is mapped, generated and announced to the downstream node of the time layer after waiting for one delay time.

14. A method for synchronizing a packet network, comprising:
a downstream node knowing synchronization states of a frequency layer and a time layer of an upstream reference source and/or an upstream node and deciding whether to perform protection switching and/or trace the upstream reference source according to upstream synchronous state information carried in a received Precision Time Protocol (PTP) message of the time layer.

15. The method according to claim 14, wherein
the synchronization state of the frequency layer at least comprises an operating mode of a phase lock loop; and
the synchronization state of the time layer at least comprises an on/off state of a time link, and whether to manually configure system time of device.

16. The method according to claim 14 or 15, wherein
when the downstream node is an intermediate node, if a phase lock loop of the frequency layer is known to be unlocked or a quality of a clock link is known to be degraded according to the synchronous state information,
if there is a protection path, switching to the protection path and new synchronous state information is generated according to synchronous state information of an upstream node and an operating mode of phase lock loop of frequency layer of the present node and is announced to the downstream node through a PTP message;
otherwise, new synchronous state information is generated according to the synchronous state information of the upstream node and the operating mode of phase lock loop of frequency layer of the present node and is announced to the downstream node through the PTP message.

17. The method according to claim 14, wherein
the synchronization state of the frequency layer at least comprises a SSM QL state;
when the downstream node is an intermediate node, if a quality of the SSM QL is known to be degraded according to the synchronous state information,
if there is a protection path, switching to the protection path and new synchronous state information is generated according to synchronous state information of an upstream node and a SSM QL state of frequency layer of the present node and is announced to the downstream node through a PTP message;
if there is no protection path, new synchronous state information is generated according to the synchronous state information of the upstream node and the SSM QL state of the frequency layer of the present node and is announced to the downstream node through the PTP message.

18. The method according to claim 16, wherein
when protection switching is performed, a following BMC algorithm is used: firstly comparing clock parameters and then comparing GM ids;
wherein the clock parameters comprise priorities, clock classes and/or accuracies.

19. The method according to claim 14, wherein
if the downstream node knows that a phase lock loop is unlocked or SSM QL is equal to a QL of the present device or the quality of clock link degrades according to the synchronous state information, the downstream node decides whether to trace the upstream reference source according to a following tracing rule:
if the upstream reference source is traceable and a reference source parameter strategy is satisfied, tracing the upstream reference source; otherwise not tracing the upstream reference source and entering a hold mode;
wherein satisfying the reference source parameter strategy refers to that requirements of any one or more combinations of following parameters are satisfied: a quality level, a clock accuracy, and the type of a time source.

20. The method according to claim 19, wherein
the tracing rule comprises:
for frequency synchronization, if an upstream frequency source is traceable and the reference source parameter strategy is satisfied, tracing an upstream frequency reference source; otherwise, not tracing the upstream frequency reference source, and frequency entering a hold mode; and
for time synchronization, if the upstream frequency source and time source are traceable and the reference source parameter strategy is satisfied, tracing an upstream time reference source; otherwise, not tracing the upstream time reference source and time entering a hold mode.

21. An apparatus for synchronizing a packet network applied in a synchronous device, the apparatus comprising a frequency layer state detection module and a frequency layer state announce module, wherein
the frequency layer state detection module is configured to detect a synchronization state of frequency layer of the synchronous device; and
the frequency layer state announce module is configured to map a synchronization state of the frequency layer into a synchronization state message of a time layer, and announce the synchronization state message to the time layer, so that a downstream node of the time layer decides whether to perform protection switching and/or trace an upstream reference source according to the synchronization state of the frequency layer.

22. The apparatus according to claim 21, wherein
the frequency layer state announce module is configured to map the synchronization state of the frequency layer into a Precision Time Protocol (PTP) message of the time layer and announce the PTP message to the downstream node of the time layer.

23. The apparatus according to claim 21 or 22, wherein
the frequency layer state detection module is configured to detect an operating mode of a phase lock loop of the frequency layer;
the frequency layer state announce module is configured to announce the synchronization state of the frequency layer to the downstream node of the time layer when the frequency layer state detection module detects that the operating mode of the phase lock loop of the frequency layer changes.

24. The apparatus according to claim 21 or 22, wherein
the frequency layer state detection module is configured to detect a Synchronization Status Message Quality Level (SSM QL) state of the frequency layer; and
the frequency layer state announce module is configured to announce the synchronization state of the frequency layer to the downstream node of the time layer when the frequency layer state detection module detects that the SSM QL of the frequency layer changes.

25. An apparatus for synchronizing a packet network applied in a synchronous device, the apparatus comprising a synchronization state detection module and a synchronization state message generation module, wherein
the synchronization state detection module is configured to detect synchronization states of a frequency layer and a time layer of a synchronous device; and
the synchronization state message generation module is configured to map the synchronization states of the frequency layer and the time layer into a Precision Time Protocol (PTP) message of the time layer and announce the PTP message to a downstream node, so that the downstream node decides whether to perform protection switching and/or trace an upstream reference source according to the synchronization state.

26. The apparatus according to claim 25, wherein
the synchronization state of the frequency layer detected by the synchronization state detection module at least comprises an operating mode of a phase lock loop and/or a Synchronization Status Message Quality Level (SSM QL) state of the frequency layer; and
the synchronization state of the time layer detected by the synchronization state detection module at least comprises an on/off state of a time link, and whether to manually configure system time of device.

27. The apparatus according to claim 25, wherein
the synchronization state message generation module is configured to map the synchronization states of the frequency layer and the time layer to following synchronization state information in the PTP message:
traceable information of a frequency source, which maps whether to follow a frequency reference source;
traceable information of a time source, which maps whether to follow a time reference source;
clock source information, which maps the type of a clock source;
clock class information, which maps a quality level of the clock source;
clock accuracy information, which maps a clock accuracy; and
hop count information, which maps hop count information from the synchronous device to a GM device.

28. The apparatus according to claim 27, wherein
the synchronization state message generation module is configured to generate the traceable information of the frequency source according to a following information generation rule:
if a phase lock loop of the present synchronous device is in a lock mode or SSM QL is equal to a QL of the clock source, mapping the traceable information of the frequency source to following the frequency reference source; and if the phase lock loop of the present synchronous device is in a self-vibration mode, a capture mode or a hold mode or the SSM QL is to a QL of the present synchronous device, mapping the traceable information of the frequency source to not following the frequency reference source.

29. The apparatus according to claim 27, wherein
the synchronization state message generation module is configured to generate the traceable information of the time source according to a following information generation rule:
when an upstream time link is on, if a phase lock loop of the present synchronous device is in a lock mode or SSM QL is equal to a QL of the clock source, mapping the traceable information of the time source to following the time reference source; and if the phase lock loop is in a self-vibration mode, a capture mode or a hold mode or the SSM QL is to a QL of the present synchronous device, mapping the traceable information of the time source to not following the time reference source; and
when the upstream time link is off, if system time of device is not manually configured, mapping the traceable information of the time source to not following the time reference source; and if the system time of the device is manually configured, mapping the traceable information of the time source to following the time reference source.

30. The apparatus according to claim 27, wherein
the synchronization state message generation module is configured to map and generate the synchronization state information and announce the synchronization state information to the downstream node of the time layer after waiting for one delay time when the synchronization state of the frequency layer changes.

31. An apparatus for synchronizing a packet network, comprising a synchronization state message processing module, wherein
the synchronization state message processing module is configured to know synchronization states of a frequency layer and a time layer of an upstream reference source and/or an upstream node and decide whether to perform protection switching and/or trace the upstream reference source according to upstream synchronous state information carried in a received Precision Time Protocol (PTP) message of the time layer.

32. The apparatus according to claim 31, wherein
the synchronization state message processing module is configured to: when a phase lock loop of the frequency layer is known to be unlocked or a quality of a clock link is known to be degraded according to the synchronous state information,
if there is a protection path, switch to the protection path and generate new synchronous state information according to synchronous state information of the upstream node and an operating mode of phase lock loop of frequency layer of the present node and/or a SSM QL state of frequency layer of the present node and announce the new synchronous state information to a downstream node through the PTP message; and
if there is no protection path, generate new synchronous state information according to the synchronous state information of the upstream node and the operating mode of the phase lock loop of the frequency layer of the present node and/or the SSM QL state of the frequency layer of the present node and announce the new synchronous state information to the downstream node through the PTP message;
wherein the synchronization state of the frequency layer at least comprises an operating mode of the phase lock loop and/or a SSM QL state; and the synchronization state of the time layer at least comprises an on/off state of a time link, and whether to manually configure system time of device.

33. The apparatus according to claim 32, wherein
the synchronization state message processing module is configured to use a following BMC algorithm when protection switching is performed: firstly comparing clock parameters and then comparing GM ids;
wherein the clock parameters comprise priorities, clock classes and accuracies.

34. The apparatus according to claim 31, wherein
the synchronization state message processing module is configured to decide whether to trace the upstream reference source according to a following tracing rule if knowing that a phase lock loop is unlocked or the quality of a clock link degrades according to the synchronous state information:
if the upstream reference source is traceable and a reference source parameter strategy is satisfied, tracing the upstream reference source; otherwise, not tracing the upstream reference source and entering a hold mode;
wherein satisfying the reference source parameter strategy refers to that requirements of any one or more combinations of following parameters are satisfied: a quality level, a clock accuracy, and the type of a time source.

35. The apparatus according to claim 34, further comprising a tracing rule module, configured to provide a tracing rule to the synchronization state message processing module;
wherein the tracing rule comprises:
for frequency synchronization, if an upstream frequency source is traceable and the reference source parameter strategy is satisfied, tracing an upstream frequency reference source; otherwise, not tracing the upstream frequency reference source, and frequency entering a hold mode; and
for time synchronization, if the upstream frequency source and time source are traceable and the reference source parameter strategy is satisfied, tracing an upstream time reference source; otherwise, not tracing the upstream time reference source and time entering a hold mode.

36. A system for synchronizing a packet network comprising the synchronization state detection module and the synchronization state message generation module according to any one of claims 25-30 and the synchronization state message processing module according to any one of claims 31-35.
